# DEMANDE DE BREVET EUROPEEN

(11) **EP 2 161 591 A1**
(43) Date de publication de la demande: **10.03.2010**
(21) Numéro de dépôt: 09169633.6
(22) Date de dépôt: 07.09.2009
(51) Int. Cl.: G01S 7/41, G01S 13/00, G01S 13/87

(54) **Procédé et système de détection de départs de tir**

(30) Priorité: 09.09.2008 FR 0804951
(71) Demandeur: Thales, 92200 Neuilly Sur Seine (FR)
(72) Inventeur: Le Chevalier, François, 92340 Bourg La Reine (FR)
(74) Mandataire: Lucas, Laurent Jacques

(57) **Abrégé**

Un radar passif (3) couplé à des émetteurs d'opportunité (1, 2, 10) couvre une zone donnée de l'espace discrétisé dans le radar en cases distances. Le radar passif (3) reçoit les signaux émis (21, 24) par les émetteurs d'opportunité et réfléchis (22) par des cibles et détecte les départs de tir dans chaque case distance où une cible est détectée par analyse des cases Doppler associée à ladite case distance, une cible étant considérée comme correspondant à un départ de tir lorsque l'écho reçu de la cible est concentré sur une case distance et réparti sur plusieurs cases Doppler.

## Description

La présente invention concerne un procédé et un système de détection de départs de tirs. Elle s'applique par exemple pour la détection et la localisation de départs de tirs d'armes à feu, telles que notamment des fusils, des canons ou encore des mortiers.

Pour détecter les origines de tirs sur un théâtre d'opérations, divers systèmes ont été proposés et mis en oeuvre. Ces systèmes sont réalisés à base de radars, de capteurs acoustiques ou de capteurs optiques. Plusieurs méthodes peuvent être utilisées.
Dans une première méthode connue, ces systèmes détectent un projectile puis reconstituent ensuite la trajectoire pour localiser l'origine du tir.
Dans une deuxième méthode connue, ces systèmes détectent le tir lui-même. Dans ce cas, ils utilisent notamment des capteurs acoustiques ou optiques.
Ces systèmes présentent certains inconvénients. En ce qui concerne les systèmes à bases de capteurs acoustiques ou optiques, ces systèmes ne permettent pas d'effectuer des opérations de détection pour tous les types de temps ou d'environnement.
En ce qui concerne les systèmes à base de radars classiques, ils n'assurent pas une surveillance permanente d'une zone puisque ces radars nécessitent de balayer l'espace. Enfin, les systèmes radar nécessitent une mesure précise de trajectoire pour remonter à l'origine du tir, ce qui complique leur mise en oeuvre.

Un but de l'invention est de pallier les inconvénients précités. A cet effet, l'invention a pour objet un procédé de détection d'un départ de tir depuis une arme, ledit procédé utilisant un radar passif couplé à des émetteurs d'opportunité couvrant une zone donnée de l'espace discrétisé dans le radar en cases distances, le radar passif recevant les signaux émis par les émetteurs d'opportunité et réfléchis par des cibles et détectant les départs de tir dans chaque case distance où une cible est détectée par analyse des cases Doppler associée à ladite case distance, une cible étant considérée comme correspondant à un départ de tir lorsque l'écho reçu de la cible est concentré sur une case distance et réparti sur plusieurs cases Doppler.
Un départ de tir est par exemple considéré comme détecté lorsque la puissance du signal reçu est supérieure à un seuil donné sur un nombre de cases Doppler supérieur un nombre N/K donné, où N est le nombre total de cases Doppler et K un nombre constant inférieur à N. K est par exemple égal à 2.
Des émetteurs d'opportunité peuvent être des émetteurs de radiodiffusion ou de télédiffusion.
Un départ de tir détecté peut en fait correspondre à une explosion.

L'invention a également pour objet un système de détection d'un départ de tir depuis une arme, comportant au moins :
- un radar passif ;
- des émetteurs d'opportunité couvrant une zone donnée de l'espace discrétisé dans le radar en cases distances,
le radar passif comportant un circuit de réception recevant les signaux émis par les émetteurs d'opportunité et réfléchis par des cibles et des moyens de traitement détectant les départs de tir dans chaque case distance où une cible est détectée par analyse des cases Doppler associée à ladite case distance, une cible étant considérée comme correspondant à un départ de tir lorsque l'écho reçu de la cible est concentré sur une case distance et réparti sur plusieurs cases Doppler.
Avantageusement, le radar passif peut être aéroporté.

D'autres caractéristiques et avantages de l'invention apparaîtront à l'aide de la description qui suit faite en regard de dessins annexés qui représentent :
- la figure 1, un exemple de réalisation d'un système selon l'invention sous forme simplifiée ;
- la figure 2, le principe de fonctionnement d'un système selon l'invention ;
- la figure 3, une illustration du principe de fonctionnement d'un radar passif.

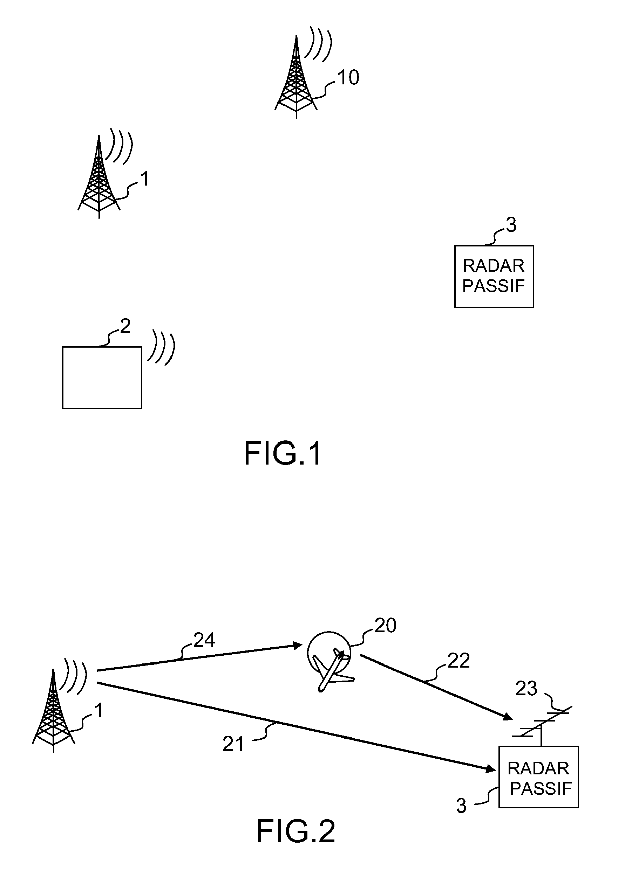

La figure 1 illustre de façon simplifiée un exemple de réalisation d'un système selon l'invention. Avantageusement, l'invention utilise un système radar passif, c'est-à-dire un système radar utilisant comme émetteurs des émetteurs d'opportunité 1, 2, 10 couplé à un système de réception radar 3 effectuant un traitement approprié des signaux, ce système de réception formant le radar passif. Ce radar 3 comporte notamment les moyens de réception et de traitement adaptés.
   Les émetteurs d'opportunité sont par exemple des émetteurs de radiodiffusion ou de télévision, d'autres types d'émetteurs sont possibles. Le système radar selon l'invention fonctionne ainsi en mode multistatique avec un système de réception 3 couplé avec des émetteurs 1, 2, 10 répartis.
   L'emploi de radars passifs pour cette fonction de détection et de localisation de départs de cibles n'était pas envisagé car les projectiles ont une section efficace radar faible dans les bandes de fréquence utilisées par ces radars fonctionnant typiquement dans des bandes de fréquences comprises entre 80 MHz et 2 GHz, c'est-à-dire avec des longueurs d'ondes comprises entre 2 mètres et 15 centimètres environ. Par ailleurs, le tireur est généralement fixe, donc non détectable par un radar.
   L'invention utilise avantageusement la signature Doppler d'une arme au moment du tir du projectile que cette arme tire. En d'autres termes, l'invention détecte l'arme au moment du tir par sa signature Doppler qui permet de la distinguer des échos fixes de l'environnement, par un filtrage passe-haut, et qui permet de la distinguer des échos mobiles par les caractéristiques particulières de cette signature Doppler. On bénéficie ainsi à la fois de la couverture permanente assurée par le radar passif, en l'occurrence les émetteurs d'opportunité 1, 2, et de la forte section efficace radar de l'arme comparée à celle du projectile.
La figure 2 illustre plus précisément le principe de fonctionnement d'un système selon l'invention. Sur cette figure, un seul émetteur est représenté.
   Le radar passif 3 reçoit d'une part un signal en provenance directe 21 de l'émetteur d'opportunité 1 et d'autres part les signaux 22 réfléchies par des cibles potentielles 20 des signaux 21, 24 émis par l'émetteur. Il délivre, pour chaque direction de pointage de l'antenne 23, une carte distance-Doppler donnant pour chaque cellule distance-Doppler le niveau de signal reçu.

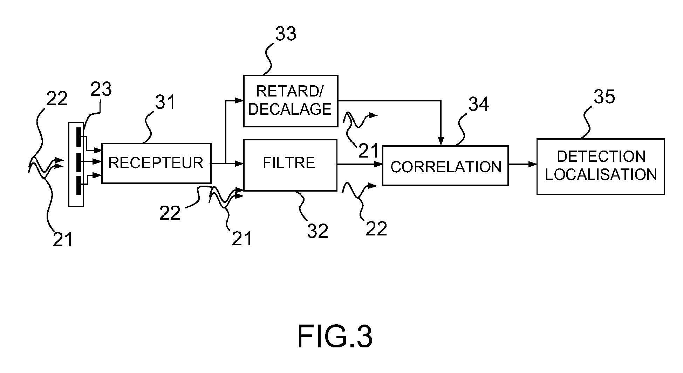

La figure 3 illustre le fonctionnement classique d'un radar passif, par exemple le radar 3 utilisé dans un système selon l'invention. Il comporte des circuits de réception 31 connectés à l'antenne de réception 23.
   Le radar 3 effectue la corrélation du signal reçu à travers l'antenne 23, préalablement réfléchi par la cible 20, avec une réplique du signal attendu, pour une position et une vitesse d'une cible éventuelle. Puis il effectue cette opération de corrélation en parallèle pour tous les triplets position-vitesse-direction d'antenne, permettant de définir les niveaux de puissance reçue dans les cellules distance-Doppler de carte distance-Doppler définie dans le radar passif 3 et couvrant l'espace couvert par les radars d'opportunité.
   Le signal attendu est simplement constitué du signal 21 émis par l'émetteur 1, reçu directement par l'antenne 23, ou par une antenne auxiliaire, et convenablement retardé et décalé en fréquence porteuse pour reconstituer les décalages en distance et en Doppler. Ainsi le radar 3 comporte par exemple, en sortie des circuits de réception 31, un filtre 32 du signal direct 21 pour ne laisser passer que le signal 22 réfléchi par la cible. Il comporte également en parallèle de ce filtre, en sortie des circuits de réception 31, un circuit 33 réalisant la réplique du signal attendu, c'est-à-dire produisant le retard et le décalage précité sur le signal 21 reçu directement. La sortie de ce circuit 33 et la sortie du filtre 32 sont reliés à un circuit de corrélation 34. Ce dernier effectue ainsi, comme indiqué précédemment, la corrélation du signal reçu avec la réplique du signal attendu, pour une position et une vitesse de la cible dont est issu le signal réfléchi 22.
   Typiquement, la durée de signal utilisée pour cette opération de corrélation peut être de quelques centaines de millisecondes, conduisant à une résolution Doppler de quelques dizaines de Hertz et donc à une résolution en vitesse de l'ordre de quelque mètres par secondes, soit à titre d'exemple une vitesse de 5 m/s pour un radar fonctionnant à 100 MHz avec une durée cohérente de 300 ms.
   Le radar comporte, en sortie du circuit de corrélation 34, des moyens de traitement 35 effectuant la détection et la localisation d'un départ de tir.

Si la cible 20 est une arme, au moment du tir, le signal 22 qu'elle renvoie est affecté d'un Doppler correspondant à son mouvement. Lors du tir ce mouvement peut être de type sinusoïdal. Le Doppler peut alors être assimilé à une période de sinusoïde de longueur typique de quelques centaines de millisecondes. Sa vitesse radiale est donc très rapidement variable, entre +200 m/s et -200 m/s par exemple. Par conséquent, sur la carte distance-Doppler, l'écho de la cible est bien concentré dans une case distance, correspondant au fait que la cible reste dans l'espace couvert par cette case distance, mais cet écho est réparti en vitesse, en raison des mouvements d'oscillation de l'arme dus au tir. Il peut de ce fait être identifié comme l'écho d'une arme en cours de tir, ou d'une explosion, les signatures des cibles étant, elles, concentrées sur le Doppler, dû au déplacement propre de la cible.

Le traitement radar peut être simple. Il peut par exemple consister, pour chaque cible détectée, à examiner les cellules adjacentes Doppler et à calculer l'étalement de la signature en Doppler, c'est-à-dire la répartition des cases Doppler, par tout indice usuel. Ainsi, cette détection peut par exemple être réalisée en comptant les cellules à la même distance où le niveau est supérieur à un seuil de détection prédéfini afin de détecter un mouvement du type « départ de tir ». En pratique, une cible de type « départ de tir » ou « explosion » est décrétée dès que le signal reçu est supérieur au seuil de détection sur plus de N/K cases Doppler, pour une même case distance. K est une quantité constante à déterminer, on peut prendre par exemple K = 2. Ainsi, le radar passif détecte les départs de cible et les explosions par analyse des cases Doppler correspondantes, dans chaque case distance où une cible est détectée. Puis il mesure l'étendue de cette signature Doppler, composée de ces cases distances et de leurs niveau de puissance, par tout critère connu, par exemple par le comptage du nombre de cases Doppler où un écho est détecté. Une cible est considérée comme concentrée sur une case distance donnée lorsque l'essentiel de la puissance reçue de cette cible est détectée sur cette case distance. Un seuil de concentration peut être défini, correspondant à un pourcentage donné de la puissance totale reçue.

L'invention permet de détecter un départ de tir depuis une arme au sol ou depuis une arme aéroportée. Par rapport aux solutions classiques, elle apporte notamment les avantages suivant :
- opérations possibles par tous les temps et dans tous types d'environnements ;
- surveillance permanente de l'ensemble d'une zone ;
- possibilité d'observation directe de l'origine des tirs, ne nécessitant pas la mesure précise d'une trajectoire pour remonter à l'origine de tir.
Avantageusement, le radar passif 3 peut être aéroporté, de façon à assurer une meilleure visibilité des armes et des impacts au sol.

## Revendications

1. Procédé de détection d'un départ de tir depuis une arme (20), **caractérisé en ce qu'**il utilise un radar passif (3) couplé à des émetteurs d'opportunité (1, 2, 10) couvrant une zone donnée de l'espace discrétisé dans le radar en cases distances, le radar passif (3) recevant les signaux émis (21, 24) par les émetteurs d'opportunité et réfléchis (22) par des cibles et détectant les départs de tir dans chaque case distance où une cible est détectée par analyse des cases Doppler associée à ladite case distance, une cible étant considérée comme correspondant à un départ de tir lorsque l'écho reçu de la cible est concentré sur une case distance et réparti sur plusieurs cases Doppler.

2. Procédé selon la revendication 1, **caractérisé en ce qu'**un départ de tir est considéré comme détecté lorsque la puissance du signal reçu (22) est supérieure à un seuil donné sur un nombre de cases Doppler supérieur un nombre N/K donné, où N est le nombre total de cases Doppler et K un nombre constant inférieur à N.

3. Procédé selon la revendication 2, **caractérisé en ce que** K est égal à 2.

4. Procédé selon l'une quelconque des revendications précédentes, **caractérisé en ce que** des émetteurs d'opportunité (1, 2, 10) sont des émetteurs de radiodiffusion.

5. Procédé selon l'une quelconque des revendications précédentes, **caractérisé en ce que** des émetteurs d'opportunité (1, 2, 10) sont des émetteurs de télédiffusion.

6. Procédé selon l'une quelconque des revendications précédentes, **caractérisé en ce que** le départ de tir correspond à une explosion.

7. Système de détection d'un départ de tir depuis une arme (20), **caractérisé en ce qu'**il comporte au moins :
- un radar passif (3) ;
- des émetteurs d'opportunité (1, 2, 10) couvrant une zone donnée de l'espace discrétisé dans le radar en cases distances,
le radar passif (3) comportant un circuit de réception (31) recevant les signaux émis (21, 24) par les émetteurs d'opportunité et réfléchis (22) par des cibles et des moyens de traitement (32, 33, 34, 35) détectant les départs de tir dans chaque case distance où une cible est détectée par analyse des cases Doppler associée à ladite case distance, une cible étant considérée comme correspondant à un départ de tir lorsque l'écho reçu de la cible est concentré sur une case distance et réparti sur plusieurs cases Doppler.

8. Système selon la revendication 7, **caractérisé en ce qu'**un départ de tir est considéré comme détecté lorsque la puissance du signal reçu (22) est supérieure à un seuil donné sur un nombre de cases Doppler supérieur un nombre N/K donné, où N est le nombre total de cases Doppler et K un nombre constant inférieur à N.

9. Système selon la revendication 8, **caractérisé en ce que** K est égal à 2.

10. Système selon l'une quelconque des revendications 7 à 9, **caractérisé en ce que** des émetteurs d'opportunité (1, 2, 10) sont des émetteurs de radiodiffusion.

11. Système selon l'une quelconque des revendications 7 à 10, **caractérisé en ce que** des émetteurs d'opportunité (1, 2, 10) sont des émetteurs de télédiffusion.

12. Système selon l'une quelconque des revendications 7 à 11, **caractérisé en ce que** le départ de tir correspond à une explosion.

13. Système selon l'une quelconque des revendications 7 à 12, **caractérisé en ce que** le radar passif (3) est aéroporté.
